# EUROPÄISCHE PATENTANMELDUNG

(11) **EP 4 559 871 A1**
(43) Veröffentlichungstag der Anmeldung: **28.05.2025**
(21) Anmeldenummer: 23020522.1
(22) Anmeldetag: 27.11.2023
(51) Int. Cl.: C01B 3/04, B01D 53/04, B01D 53/047, C01B 3/50, F02C 3/22

(54) **VERFAHREN UND VORRICHTUNG ZUR ABTRENNUNG VON AMMONIAK AUS AMMONIAKSPALTGAS**

(71) Anmelder: Linde GmbH, 82049 Pullach (DE)
(72) Erfinder: Peschel, Andreas, 82049 Pullach (DE); Reinke, Michael, 82049 Pullach (DE); Ried, Thomas, 82049 Pullach (DE)
(74) Vertreter: Fischer, Werner

(57) **Zusammenfassung**

Die Erfindung betrifft ein Verfahren sowie eine Vorrichtung zur Erzeugung eines weitgehend aus Wasserstoff und Stickstoff bestehenden Produktgases (Formiergas) (7), wobei ein Ammoniak enthaltender Einsatzstoff (1) einem Spaltreaktor (S) zugeführt wird, um Ammoniak mit katalytischer Unterstützung thermisch zu spalten und ein Wasserstoff, Stickstoff und Ammoniak umfassendes Spaltgas (3) zu erhalten, von dem Ammoniak zur Bildung des Formiergases (7) in einer Trenneinrichtung (T) adsorptiv abgetrennt wird. Kennzeichnend hierbei ist, dass das Spaltgas (3) in der Trenneinrichtung (T) durch Druckwechseladsorption (DWA) (D) behandelt wird, um Ammoniak selektiv abzutrennen und ein, das abgetrennte Ammoniak enthaltendes DWA-Restgas (4) sowie ein im Ammoniakgehalt reduziertes Spaltgas (5) zu gewinnen, das das Formiergas bildet oder aus dem das Formiergas (7) durch weitere Behandlung erhalten wird.

## Beschreibung

Die Erfindung betrifft ein Verfahren zur Erzeugung eines weitgehend aus Wasserstoff und Stickstoff bestehenden Produktgases (Formiergas), wobei ein Ammoniak enthaltender Einsatzstoff einem Spaltreaktor zugeführt wird, um Ammoniak mit katalytischer Unterstützung thermisch zu spalten und ein Wasserstoff, Stickstoff und Ammoniak umfassendes Spaltgas zu erhalten, von dem Ammoniak zur Bildung des Formiergases in einer Trenneinrichtung adsorptiv abgetrennt wird.

Weiterhin betrifft die Erfindung eine Vorrichtung zur Durchführung des erfindungsgemäßen Verfahrens.

Die katalytisch unterstütze thermische Spaltung von Ammoniak ist bekannt und seit vielen Jahren Stand der Technik. Die dabei ablaufende Reaktion

2NH₃ ↔ N₂ + 3H₂

ist endotherm (ΔH=46,2kJ/mol). Die von dem eingesetzten Katalysatormaterial abhängige Lage des Reaktionsgleichgewichts verschiebt sich mit fallendem Druck und steigender Temperatur zur Produktseite.

Durch Ammoniakspaltung erhältliches Formiergas, in dem Wassersstoff und Stickstoff in unterschiedlichen Verhältnissen vorliegen können, wird beispielsweise als Schutzgas beim Schweißen oder der Wärmebehandlung von Metallen oder als Reduziergas zur Aktivierung von Katalysatoren eingesetzt. Es verbrennt ohne Bildung von klimaschädlichem Kohlendioxid, weshalb es auch vorteilhaft als Brennstoff verwendet werden kann. Da der enthaltene Stickstoff als Temperaturmoderator wirkt und den Massenstrom der Rauchgase erhöht, eignet es sich besonders als Brenngas für den kohlendioxidfreien Betrieb von Gasturbinen.

Zur industriellen Ammoniakspaltung können ähnliche Anlagen eingesetzt werden, wie sie heute zur großtechnischen Synthesegaserzeugung durch Dampfreformierung von Kohlenwasserstoffen verwendet werden. Derartige Anlagen umfassen einen Spaltreaktor mit einem Feuerraum, in dem mit Katalysatormaterial gefüllte Spaltrohre angeordnet sind, sowie ein Abhitzesystem. Der Feuerraum wird durch einen oder mehrere, mit importiertem Brennstoff betriebene Brenner beheizt, die Wärme für die endotherm ablaufende Spaltung des durch die Spaltrohre geführten Ammoniaks liefern.

Um das erzeugte Formiergas ohne oder mit nur geringem Verdichtungsaufwand als Produkt abgeben zu können, wird die Ammoniakspaltung zweckmäßigerweise bei einem Druck (Spaltdruck) durchgeführt, der zwischen 20 und 40bar liegt. Dies ist umso einfacher möglich, als das für die Spaltung bestimmte Ammoniak gewöhnlich flüssig zur Verfügung steht, so dass sein Druck mit wenig Energieeinsatz erhöht werden kann. Damit unter diesen Bedingungen ein ausreichend hoher, wirtschaftlich sinnvoller Umsetzungsgrad des eingesetzten Ammoniaks erreicht wird, ist es notwendig, die Spaltung bei hohen Temperaturen zwischen ca. 500 und 1000°C durchzuführen.

Das aus dem Spaltreaktor austretende Spaltgas besteht zu einem großen Teil aus Wasserstoff und Stickstoff, enthält daneben aber auch nicht umgesetztes Ammoniak sowie Wasser, das bereits in dem Ammoniak enthaltenden Einsatzstoff vorliegt.

Insbesondere dann, wenn das Formiergas als Brennstoff- beispielsweise in einer Gasturbine - eingesetzt werden soll, wird eine weitgehende Abtrennung des bei der Spaltung nicht umgesetzten Ammoniaks angestrebt, da bei dessen Verbrennung gesundheitsschädliche Stickoxide entstehen, die nur in engen Grenzen in die Atmosphäre freigesetzt werden dürfen und die sich nur durch eine aufwendige katalytische Behandlung aus den bei der Verbrennung gebildeten Rauchgasen entfernen lassen.

Zur Gewinnung des Formiergases wird das Spaltgas daher nach dem Stand der Technik eine Wasserwäsche unterzogen, bei der es beispielsweise bis unter den Wassertaupunkt abgekühlt wird, so dass Wasser kondensiert und das stark hygroskopische Ammoniak durch das kondensierte Wasser aus dem Spaltgas ausgewaschen wird. Bei einer Abkühlung des Spaltgases auf Temperaturen zwischen 30°C und 70°C, reicht die Menge des enthaltenen Wassers gewöhnlich aus, um den Ammoniakgehalt so weit zu reduzieren, dass eine Abgabe des erhaltenen Formiergases als Brenngas möglich ist. Eine gesonderte Zuführung von Waschwasser ist zumindest unter normalen Betriebsbedingungen nicht notwendig.

Das bei der Wäsche anfallende Ammoniak/Wasser-Gemisch muss mit erheblichem finanziellem Aufwand regeneriert oder als Abwasser entsorgt werden, was sich negativ auf die Wirtschaftlichkeit der Formiergaserzeugung auswirkt. Aus der EP4112539A1 ist auch bekannt, das Ammoniak/Wasser-Gemisch nicht zu regenerieren, sondern im Spaltofen einzusetzen, wobei der größte Teil des Gemisches zur Wasserstoffgewinnung in die Spaltrohre geführt wird. Zur Einstellung der in die Spaltrohre eigebrachten Wassermenge wird ein kleinerer Teil geregelt ausgeschleust und unter Bildung und Freisetzung von Stickoxiden zur Befeuerung des Spaltofens verwendet.

Aufgabe der Erfindung ist es, ein Verfahren der gattungsgemäßen Art sowie eine Vorrichtung zu dessen Durchführung anzugeben, die dazu geeignet sind, die Nachteile des Standes der Technik zu überwinden.

Die gestellte Aufgabe wird verfahrensseitig erfindungsgemäß dadurch gelöst, dass das Spaltgas in der Trenneinrichtung durch Druckwechseladsorption (DWA) behandelt wird, um Ammoniak selektiv abzutrennen und ein, das abgetrennte Ammoniak enthaltendes DWA-Restgas sowie ein im Ammoniakgehalt reduziertes Spaltgas zu gewinnen, das das Formiergas bildet oder aus dem das Formiergas durch weitere Behandlung erhalten wird.

Bei der Druckwechseladsorption wird das abgekühlte Spaltgas mit einem Eintrittsdruck einem von mehreren Adsorbern eines Druckwechseladsorbers zugeführt, die jeweils mit einem Material gefüllt sind, dass im Spaltgas enthaltenes Ammoniak adsorbiert und festhält, während es Wasserstoff und Stickstoff weitgehend ungehindert passieren lässt, so dass ein im Ammoniakgehalt reduziertes Spaltgas den Adsorber mit einem Druck verlässt, der bis auf Strömungsverluste dem Eintrittsdruck des Spaltgases entspricht. Da die Aufnahmefähigkeit des Adsorbermaterials für Ammoniak begrenzt ist, muss der Spaltgasstrom in den Adsorber nach einer gewissen Zeit unterbrochen werden, ehe der Ammoniakgehalt des aus dem Adsorber austretenden, im Ammoniakgehalt reduzierten Spaltgases inakzeptabel hohe Werte erreicht. Während der Spaltgasstrom zu einem anderen Adsorber des Druckwechseladsorbers mit noch aufnahmefähigem Adsorbermaterial umgelenkt wird, wird der mit Ammoniak beladene Adsorber regeneriert. Hierzu wird der Druck im Adsorber bis auf den sog. Regenerierdruck abgesenkt, um Ammoniak zu desorbieren. Zur möglichst vollständigen Ammoniakentfernung kann der Adsorber während und/oder nach der Druckabsenkung mit einem Teil des durch Druckwechseladsorption erhaltenen, im Ammoniakgehalt reduzierte Spaltgases gespült werden. Je geringer der Regenerierdruck ist, desto weniger Regeneriergas ist nötig, um das Ammoniak zu desorbieren, so dass die Formiergasausbeute steigt. Das bei der Adsorberregenerierung desorbierte Ammoniak wird aus dem Adsorber als Teil eines als DWA-Restgas bezeichneten Gasgemisches abgezogen, das auch das eingesetzte Regeneriergas enthalten kann, wobei der Restgasdruck weitgehend dem Regenerierdruck entspricht.

Eine Ausgestaltung des erfindungsgemäßen Verfahrens sieht vor, das durch Druckwechseladsorption erhaltene, im Ammoniakgehalt reduzierte Spaltgas einer Temperaturwechseladsorption (TWA) zu unterziehen, um Ammoniak selektiv abzutrennen und ein, das abgetrennte Ammoniak enthaltendes TWA-Restgas sowie ein im Ammoniakgehalt weiter reduziertes Spaltgas zu gewinnen, dass das Formiergas bildet. Durch die Druckwechseladsorption wird dabei der größte Teil des im Spaltgas enthaltenen Ammoniaks abgetrennt, während in der Temperaturwechseladsorption eine Feinreinigung erfolgt. Vorzugsweise wird ein Teil des so erhaltenen Formiergases als Regeneriergas zur Regenerierung der bei der Temperaturwechseladsorption eingesetzten Adsorber verwendet und gelangt auf diese Weise in das TWA-Restgas.

Sowohl bei der Druck- als auch der Temperaturwechseladsorption gehen neben Ammoniak unvermeidlich auch Wasser, Stickstoff und Wasserstoff durch Co-Adsorption aus dem Spaltgas in das jeweilige Restgas über. Die selektive Abtrennung des Ammoniaks ist in diesem Zusammenhang so zu verstehen, dass insbesondere Stickstoff und Wasserstoff nur zu geringen, dem Effekt der Co-Adsorption geschuldeten Teilen aus dem Spaltgas abgetrennt werden, während das im Spaltgas enthaltene Wasser neben Ammoniak vollständig in das DWA- und/oder das TWA-Restgas übergehen kann. Vorzugsweise weist ein bei der selektiven Ammoniakabtrennung erhaltenes Restgas einen Gehalt an Stickstoff und Wasserstoff von weniger als 99% auf.

Eine weitere Ausgestaltung des erfindungsgemäßen Verfahrens sieht vor, dass zumindest ein Teil des DWA- und/oder des TWA-Restgases der katalytisch unterstützten thermischen Ammoniakspaltung als Einsatzstoff zugeführt wird.

Hierdurch ist es möglich, in dem oder den Restgasen enthaltenes Ammoniak in Wasserstoff und Stickstoff zu spalten und die Formiergasausbeute des Verfahrens zu erhöhen. Das mit dem oder den Restgasen zurückgeführte Wasser wirkt darüber hinaus in dem zur Ammoniakspaltung eingesetzten Reaktor als Temperaturmoderator.

Das erfindungsgemäße Verfahren weiterbildend wird vorgeschlagen, zumindest einen Teil des DWA- und/oder des TWA-Restgases zu verbrennen, um Wärme für die Durchführung der endothermen Ammoniakspaltung zu gewinnen.

Sinnvollerweise wird der Adsorptionsschritt der Druckwechseladsorption bei einem Druck durchgeführt, der bis auf Leitungsverluste dem Spaltdruck entspricht, bei dem die Ammoniakspaltung durchgeführt wird. Vorzugsweise liegt der Spaltdruck zwischen 20 und 40 bar, so dass auch das im Ammoniakgehalt reduzierte Spaltgas mit einem in diesem Bereich liegenden Druck durch die Druckwechseladsorption erhalten wird.

Die Abtrennung des Ammoniaks aus dem Spaltgas erfolgt mittels geeigneter Adsorbenzien, die Ammoniak sehr gut, Wasserstoff und Stickstoff dagegen nicht bzw. nur sehr schlecht adsorbieren. Ein geeignetes Adsorbens ist beispielsweise Aluminagel, das laugebeständig ist und unter den Bedingungen einer Druckwechseladsorption Ammoniak ausgezeichnet ad- und auch wieder desorbiert. Wasserstoff und Stickstoff lagern sich dagegen nur in geringem Maß an das Aluminagel an, wodurch sie nahezu vollständig in das als Hochdruckprodukt der DWA erhaltene, im Ammoniakgehalt reduzierte Spaltgas übergehen.

Vorzugsweise wird die Ammoniakspaltung mit Unterstützung eines Katalysators durchgeführt, der auf Nickel oder Eisen oder einem Metall der Platingruppe oder Karbiden bzw. Nitriden von Übergansmetallen oder bimetallischen Übergansmetallen basiert.

Das erfindungsgemäß erzeugte Formiergas kann in einer Vielzahl von Anwendungen eingesetzt werden. Insbesondere Formiergas, bei dessen Erzeugung sich an die adsorptive Abtrennung von Wasser und/oder Ammoniak aus dem Spaltgas keine Sticksoffentfernung anschließt, ist als Brennstoff für eine Gasturbine geeignet.

Weiterhin betrifft die Erfindung eine Vorrichtung zur Erzeugung eines weitgehend aus Wasserstoff und Stickstoff bestehenden Produktgases (Formiergas) aus einem Ammoniak enthaltenden Einsatzstoff, aufweisend einen Spaltreaktor, mit dem das im Einsatzstoff enthaltene Ammoniak zum Erhalt eines Wasserstoff, Stickstoff und Ammoniak enthaltenden Spaltgases mit katalytischer Unterstützung thermisch gespalten werden kann, sowie einer Trenneinrichtung, mit der Ammoniak aus dem Spaltgas adsorptiv abtrennbar ist, um das Formiergas zu erhalten.

Die gestellte Aufgabe wird vorrichtungsseitig erfindungsgemäß dadurch gelöst, dass die Trenneinrichtung einen Druckwechseladsorber umfasst, der dazu eingerichtet ist, Ammoniak selektiv aus dem Spaltgas abzutrennen, wobei ein, das abgetrennte Ammoniak enthaltendes DWA-Restgas sowie ein im Ammoniakgehalt reduziertes Spaltgas entstehen, dass das Formiergas bildet oder aus dem das Formiergas durch weitere Behandlung erhalten werden kann.

In einer Ausgestaltung der erfindungsgemäßen Vorrichtung umfasst die Trenneinrichtung einen stromabwärts des Druckwechseladsorbers angeordneten Temperaturwechseladsorber, mit dem Ammoniak selektiv aus dem im Ammoniakgehalt reduzierten Spaltgas abgetrennt werden kann, um das Formiergas sowie ein Ammoniak enthaltendes TWA-Restgas zu erhalten.

Sinnvollerweise ist der Spaltreaktor mit der Trenneinrichtung so verbunden, dass zumindest ein Teil des DWA- und/oder des TWA-Restgases dem Spaltreaktor als Einsatzstoff zuführbar ist.

In einer weiteren Ausgestaltung der erfindungsgemäßen Vorrichtung umfasst der Spaltreaktor zumindest einen Brenner zur Bereitstellung von Wärme für die katalytisch unterstützte thermische Ammoniakspaltung, der mit der Trenneinrichtung so verbunden ist, dass zumindest ein Teil des ersten und/oder des DWA- und/oder des TWA-Restgases dem Brenner als Brennstoff zuführbar ist.

Vorzugsweise enthält der Spaltreaktor einen Katalysator, der auf Nickel oder Eisen oder einem Metall der Platingruppe oder Karbiden bzw. Nitriden von Übergangsmetallen oder bimetallischen Übergangsmetallen basiert und über den der Ammoniak enthaltende Einsatzstoff geführt werden kann.

In einer bevorzugten Ausgestaltung der erfindungsgemäßen Vorrichtung umfasst sie eine Gasturbine der zumindest ein Teil des bildbaren Formiergases als Brenngas zuführbar ist.

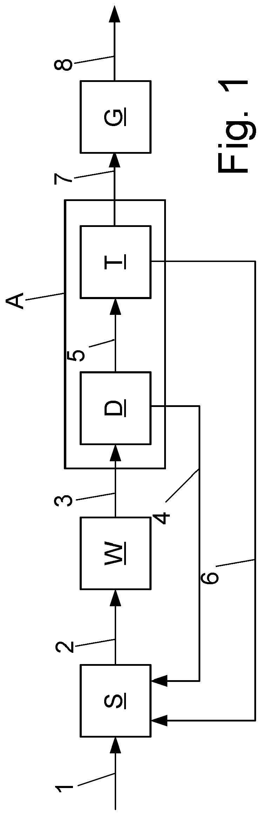

Im Folgenden soll die Erfindung anhand eines in der **Figur 1** schematisch dargestellten Ausführungsbeispiels näher erläutert werden.

Die Figur 1 zeigt eine bevorzugte Ausgestaltung der Erfindung, in der Formiergas als Brennstoff für eine Gasturbine erzeugt wird.

Dem brennerbefeuerten Spaltreaktor S wird ein Ammoniak enthaltender Einsatzstoff 1, bei dem es sich beispielsweise um handelsübliches, bereits verdampftes Ammoniak handelt, zugeführt, um Ammoniak mit katalytischer Unterstützung bei einem Druck zwischen 20bar und 40bar und einer Temperatur zwischen 500°C und 1000°C thermisch in Wasserstoff und Stickstoff zu spalten. Das im Spaltreaktor S erhältliche, Wasserstoff, Stickstoff sowie nicht umgesetztes Ammoniak enthaltene Spaltgas 2 wird nach einer Abkühlung in der Abkühleinrichtung W über Leitung 3 in die Trenneinrichtung A geführt. Hier wird in einem Druckwechseladsorber (D) Ammoniak selektiv durch Druckwechseladsorption (DWA) abgetrennt und ein, das abgetrennte Ammoniak enthaltendes DWA-Restgas 4 sowie ein im Ammoniakgehalt reduziertes Spaltgas 5 gewonnen. Während das DWA-Restgas 4 zur Erzeugung von für die Ammoniakspaltung benötigter Wärme im Spaltreaktor S verbrannt wird, wird das im Ammoniakgehalt reduzierte Spaltgas 5 in den zur Trenneinrichtung A gehörenden Temperaturwechseladsorber T weitergeführt, wo durch Temperaturwechseladsorption (TWA) weiters Ammoniak selektiv abgetrennt und ein, das abgetrennte Ammoniak enthaltendes TWA-Restgas 6 sowie ein weitgehend aus Wasserstoff und Stickstoff bestehendes Formiergas 7 erhalten werden. Genauso wie das DWA-Restgas wird auch das TWA-Restgas zur Wärmeerzeugung im Spaltreaktor S verbrannt. Das Formiergas 7 wird als Brennstoff in der vorzugsweise mit einem Stromgenerator (nicht dargestellt) gekoppelten Gasturbine G eingesetzt, wobei ein weitgehend stickoxidfreies Abgas 8 entsteht, das ohne weitere Behandlung in die Atmosphäre freigesetzt werden kann.

## Patentansprüche

1. Verfahren zur Erzeugung eines weitgehend aus Wasserstoff und Stickstoff bestehenden Produktgases (Formiergas) (7), wobei ein Ammoniak enthaltender Einsatzstoff (1) einem Spaltreaktor (S) zugeführt wird, um Ammoniak mit katalytischer Unterstützung thermisch zu spalten und ein Wasserstoff, Stickstoff und Ammoniak umfassendes Spaltgas (3) zu erhalten, von dem Ammoniak zur Bildung des Formiergases (7) in einer Trenneinrichtung (A) adsorptiv abgetrennt wird, **dadurch gekennzeichnet, dass** das Spaltgas (3) in der Trenneinrichtung (A) durch Druckwechseladsorption (DWA) (D) behandelt wird, um Ammoniak selektiv abzutrennen und ein, das abgetrennte Ammoniak enthaltendes DWA-Restgas (4) sowie ein im Ammoniakgehalt reduziertes Spaltgas (5) zu gewinnen, das das Formiergas bildet oder aus dem das Formiergas (7) durch weitere Behandlung erhalten wird.

2. Verfahren nach Anspruch 1, **dadurch gekennzeichnet, dass** aus dem im Ammoniakgehalt reduzierten Spaltgas (5) Ammoniak selektiv durch Temperaturwechseladsorption (TWA) (T) abgetrennt wird, um das Formiergas (7) sowie ein Ammoniak enthaltendes TWA-Restgas (6) zu erhalten.

3. Verfahren nach einem der Ansprüche 1 oder 2, **dadurch gekennzeichnet, dass** bei der selektiven Abtrennung von Ammoniak (D, T) auch Wasser aus dem Spaltgas abgetrennt wird.

4. Verfahren nach einem der Ansprüche 1 bis 3, **dadurch gekennzeichnet, dass** zumindest ein Teil des DWA- (4) und/oder des TWA-Restgases (6) der katalytisch unterstützten thermischen Ammoniakspaltung als Einsatzstoff zugeführt wird.

5. Verfahren nach einem der Ansprüche 1 bis 4, **dadurch gekennzeichnet, dass** zumindest ein Teil des DWA- (4) und/oder des TWA-Restgases (6) verbrannt wird, um Wärme für die katalytisch unterstützte thermische Ammoniakspaltung zu gewinnen.

6. Verfahren nach einem der Ansprüche 1 bis 5, **dadurch gekennzeichnet, dass** ein Katalysator zur Ammoniakspaltung eingesetzt wird, der auf Nickel oder Eisen oder einem Metall der Platingruppe oder Karbiden bzw. Nitriden von Übergangsmetallen oder bimetallischen Übergangsmetallen basiert.

7. Verfahren nach einem der Ansprüche 1 bis 6, **dadurch gekennzeichnet, dass** das Formiergas (7) einer Gasturbine (G) als Brennstoff zugeführt wird.

8. Vorrichtung zur Erzeugung eines weitgehend aus Wasserstoff und Stickstoff bestehenden Produktgases (Formiergas) (7) aus einem Ammoniak enthaltenden Einsatzstoff (1), aufweisend einen Spaltreaktor (S), mit dem das im Einsatzstoff (1) enthaltene Ammoniak zum Erhalt eines Wasserstoff, Stickstoff und Ammoniak enthaltenden Spaltgases (3) mit katalytischer Unterstützung thermisch gespalten werden kann, sowie einer Trenneinrichtung (A), mit der Ammoniak aus dem Spaltgas adsorptiv abtrennbar ist, um das Formiergas zu erhalten, **dadurch gekennzeichnet, dass** die Trenneinrichtung (A) einen Druckwechseladsorber (D) umfasst, der dazu eingerichtet ist, Ammoniak selektiv aus dem Spaltgas (3) abzutrennen, wobei ein, das abgetrennte Ammoniak enthaltendes DWA-Restgas (4) sowie ein im Ammoniakgehalt reduziertes Spaltgas (5) entstehen, das das Formiergas bildet oder aus dem das Formiergas (7) durch weitere Behandlung erhalten werden kann.

9. Vorrichtung nach Anspruch 8, **dadurch gekennzeichnet, dass** die Trenneinrichtung (T) einen stromabwärts des Druckwechseladsorbers (D) angeordneten Temperaturwechseladsorber (T) umfasst, mit dem Ammoniak selektiv aus dem im Ammoniakgehalt reduzierten Spaltgas (5) abgetrennt werden kann, um das Formiergas (7) sowie ein Ammoniak enthaltendes TWA-Restgas (6) zu erhalten.

10. Vorrichtung nach einem der Ansprüche 8 oder 9, **dadurch gekennzeichnet, dass** der Spaltreaktor (S) mit der Trenneinrichtung (T) so verbunden ist, dass zumindest ein Teil des DWA- (4) und/oder des TWA-Restgases (6) dem Spaltreaktor als Einsatzstoff zuführbar ist.

11. Vorrichtung nach einem der Ansprüche 8 bis 10, **dadurch gekennzeichnet, dass** der Spaltreaktor (S) zumindest einen Brenner zur Bereitstellung von Wärme für die katalytisch unterstützte thermische Ammoniakspaltung umfasst, der mit der Trenneinrichtung (T) so verbunden ist, dass zumindest ein Teil des DWA- (4) und/oder des TWA-Restgases (6) dem Brenner als Brennstoff zuführbar ist.

12. Vorrichtung nach einem der Ansprüche 8 bis 11, **dadurch gekennzeichnet, dass** der Spaltreaktor (S) einen Katalysator enthält, der auf Nickel oder Eisen oder einem Metall der Platingruppe oder Karbiden bzw. Nitriden von Übergangsmetallen oder bimetallischen Übergangsmetallen basiert.

13. Vorrichtung nach einem der Ansprüche 8 bis 12, **dadurch gekennzeichnet, dass** sie eine Gasturbine (G) umfasst, der zumindest ein Teil des bildbaren Formiergases (7) als Brenngas zugeführt werden kann.
